# EUROPEAN PATENT APPLICATION

(11) **EP 0 826 413 A1**
(43) Date of publication of application: **04.03.1998**
(21) Application number: 96113653.8
(22) Date of filing: 26.08.1996
(51) Int. Cl.: B01D 61/18

(54) **Method for producing filter elements and the filter elements thus produced**

(71) Applicant: Max-Planck-Gesellschaft zur Förderung der Wissenschaften e.V. Berlin, 80539 München (DE)
(72) Inventor: Mehl, Ehrenfried, Dr., 81479 München (DE); Lottspeich, Friedrich, Dr., 82131 Stockdorf (DE)
(74) Representative: VOSSIUS & PARTNER

(57) **Abstract**

The invention relates to a method for producing a filter element by generating a microporous element within an aperture of a solid moisture-impervious support, comprising the steps of applying a liquid phase to the aperture so as to form a self-sustaining liquid layer over the cross-section of the aperture; and causing solidification in spongy form of at least part of the liquid phase.

The invention provides a cost-effective method for producing a filter element whereby a complete circumferential contact of the microporous element to the support is readily obtained even where overall size is small.

## Description

The present invention relates to novel methods for producing filter elements which comprise a microporous element. Such filter elements are commonly used for micro filtration, e.g., for solid-liquid separation, clearing of solutions, harvesting bacteria, and the like. Filter elements are also used for column chromatography, adsorption/immobilisation of proteins, e.g. biocatalysts, as retainer for granular material.

There is an increasing demand in the area of analytical chemistry for devices capable of handling moderate to small sample volumes, in a manner which is rapid, gives high recovery and minimizes any possibility of sample contamination. Among other desired attributes are low cost, ease of manufacture and suitability for application with conventional equipment.

Previous devices for micro filtration etc. involve the use of preformed filter material. Synthetic polymers such as nylon, methacrylate or semisynthetic polymers such as nitro cellulose, or cellulose acetate have been used over decades for preparation of microporous membranes. Mostly the filter material is a nonwoven material which is formed from a web of synthetic or natural fibers. The fibers may or may not be bonded together by a binder. In general, discs are cut from the nonwoven material and positioned within a sample tube or the like. Problems in connection with this previous approach include an insufficient contact of the pre-cut filter disc to the wall of the filter tube leaving small gaps and thereby allowing the applied liquid sample to escape.

If the filter disc is attached to the filter tube by an adhesive, the adhesive may influence the filter properties of the material in an uncontrollable manner. The same holds true when the filter disc is welded into the filter tube by locally applying heat or by ultrasonic treatment.

The problems discussed above are enhanced when the overall size of the filter element is reduced. It has therefore hitherto not been technically feasible to produce satisfactory filter elements with apertures of a diameter as low as several micrometer.

It is therefore an object of the present invention to provide a cost-effective method for producing a filter element whereby a complete circumferential contact of the microporous element to the support is readily obtained even with a small overall size.

In its broadest aspect, the present invention relates to a method for producing a filter element by generating a microporous element within an aperture of a solid moisture-impervious support, comprising the steps of applying a liquid phase to the aperture so as to form a self-sustaining liquid layer over the cross-section of the aperture; and causing solidification in spongy form of at least part of the liquid phase.

Accordingly, the microporous element is generated in situ from a liquid precursor. The liquid precursor readily takes a shape that matches the shape of the aperture in the support. Any imperfections like burrs etc. of the aperture are hereby compensated for. Upon solidification, a microporous element is obtained, which snugly fits into the aperture of the support and has complete circumferential contact to the walls thereof.

Preferably, the support is formed of a plastic such as polypropylene, polyethylene, propylene/ethylene copolymer, polyvinyl acetate, polyamide, polystyrene, polyethylene terephthalate, polyether etherketon (PEEK), polycarbonate, polyethylene vinylacetate, polyester, polyimide, or mixtures thereof. Also included are composite materials of plastic with fibres or frames of glass, silicon dioxide, carbon or ceramics.

Usually, the support has the form of a tube, preferably with circular cross-section, and the microporous element is generated at or near to one edge of the tube. In order to facilitate sample application and for accommodation of greater sample volumes, preferably at least a section of the tube is of conical form, having a smaller and a larger cross-sectional end, with the microporous element generated at or near to the smaller cross-sectional end. For example, the support is a pipette tip such as commonly used with Eppendorf pipettes. In order to prevent dislocation, such as slipping, of the microporous element formed, the tube may have a structured inner surface, like a surface with rings or grooves.

It is also envisaged to arrange a plurality of supports, e.g., up to several hundreds, in parallel alignment to form a multiple channel filter element. The multiple channel filter element will allow a biological sample to be tested simultaneously against hundreds of reagents. Alternatively, the support can comprise a plurality of apertures, e.g., in the form of parallel bores or tapered holes. When the multiple channel element is to be evaluated optically, it is convenient to include an opacifying agent such as carbon black into the support material to prevent interference from neighbouring channels.

There are several possibilities of applying the liquid phase to the aperture of the support. The various methods will be exemplified with reference to a tubular support but will not be limited thereto. As the liquid phase in general is a solution the terms "liquid phase" and "solution" will be used interchangeably unless otherwise required by the context. Conveniently, application of the solution to the aperture is accomplished by allowing the solution to ascend in the tube by capillary action. The support, for example a tube, is dipped into the solution and raised again. Due to the surface tension of the solution, a liquid layer will remain in the aperture over the cross-section of the aperture. If, for example, the viscosity of the solution is too high different methods for applying the solution to the aperture may be adopted. The ascending force of the solution may be enhanced by temporarily sealing the distant end of the tube, slightly heating the tube, then dipping the tube with its free end into the solution, and allowing the tube to cool to ambient temperature, whereby the solution is drawn into the tube by the volume contraction of the enclosed air. Alternatively, the solution can be introduced from the distant end of the tube and may be brought into its final position by centrifugation. Preferably, the end at or near to which the microporous element is to be formed is sealed with a cap or by pressing against an elastic plate. The cap or the elastic plate preferably has microgrooves or micropores for allowing the enclosed air to escape. Then the arrangement is subjected to centrifugation during which the solution migrates to the end of the tube where it is retained at least partially by the cap or elastic plate. The cap or the elastic plate may be removed before or after solidification, in particular before solidification of the solution or of a part of the solution.

The practitioner often faces the problem that aqueous samples that are introduced in containers made of hydrophobic material tend to adhere to the wall in drops rather than flowing down and collecting at the bottom. In order to avoid this phenomena, the inner wall of a tube which acts as support for a filter element according to the invention, may be coated with a hydrophilic coating. The hydrophilic coating will prevent aqueous samples from adhering to the wall of the support tube. Also, there is no adsorptive loss of biopolymers due to adsorption to the wall of the support. If the inner wall of the tube is coated with the hydrophilic coating, the edge of the tube next to the microporous element is preferably kept free of hydrophilic coating. This will prevent sample liquids which exit from the edge of the tube next to the microporous element from creeping to adjacent filter elements, especially in the embodiment of the present invention where a plurality of filter elements is arranged to form a multiple channel filter element.

The hydrophilic coating is conveniently prepared by applying a solution of one or more polyvinyl esters in an organic solvent to the inner wall of the tube, allowing the organic solvent to evaporate, and partially hydrolyzing the resulting layer of polyvinyl ester at the surface thereof. Suitable polyvinyl esters include polyvinyl acetate (a molecular weight of about 500000 is generally suitable), polyvinyl propionate and polyvinyl stearate.

Partial hydrolysis of the layer of polyvinyl ester is performed by contacting the layer of polyvinyl ester with an alkaline aqueous solution, such as sodium hydroxide. The edge of the tube next to the microporous element can be kept free of hydrophilic coating by applying the solution of polyvinyl ester only to a part of the inner wall of the tube, for example by partially immersing the tube into the solution of polyvinyl ester. After hydrolysis, the microporous element can be generated at or near to the edge of the tube, that has not been brought into contact with the polyvinyl ester solution. Alternatively, the entire inner wall of the tube can be coated with polyvinyl ester, but only part thereof is hydrolyzed.

Alternatively, the hydrophilic coating can be generated by using a high molecular weight polypropylene glycol, for example having a molecular weight of 4000 or higher. Such polypropylene glycols show moderate to good solubility in cold water, however poor solubility in warm water. Accordingly, a cold aqueous solution of polypropylene glycol, for example at 0° to 4°C, might be introduced into the tube and subsequently the temperature is raised, for example to about 20°C. The polypropylene glycol coming out of the solution shows a high affinity to the inner wall of the tube and deposits thereon as a thin layer. Excess polypropylene glycol solution is then removed. Additional chemical crosslinking may be advantageous in some cases.

Employing the method(s) according to the present invention, filter elements having an aperture of a diameter from 0.02 mm to 4 mm, in particular from 0.2 to 2.0 mm, can be produced.

In a first embodiment, the present invention relates to a method for producing a filter element by generating a microporous element within an aperture of a solid moisture-impervious support, comprising the steps of providing a solution of a synthetic or semi-synthetic resin in a solvent; applying the solution to the aperture so as to form a self-sustaining liquid layer over the cross-section of the aperture; and causing a nonsolvent to diffuse into the layer, which nonsolvent is miscible with the solvent, whereby the resin precipitates to form the microporous element.

Preferably the resin is selected from the group consisting of polyvinyl esters, partially deacylated polyvinyl esters, cellulose derivatives, polyamides, and mixtures thereof. Among polyvinyl esters polyvinyl acetate, polyvinyl propionate, polyvinyl stearate, and polyvinyl cinnamic acid ester; among cellulose derivatives nitrocellulose, and cellulose propionate are to be mentioned. A suitable polyamide is Nylon 6/6.

In certain instances, the resin preferably comprises both hydrophilic and hydrophobic segments within its molecules. Suitable resins include poly(vinyl alcohol-co-ethylene), poly(vinyl alcohol-co-vinylacetate), ethylene acrylic acid copolymer, ethylene acrylic ester copolymer, ethylene acrylamide copolymer, acrylic acid vinylacetate copolymer, acrylamide vinylacetate copolymer, copolymer of acrylic acid diamine monoamide with vinylacetate, poly(vinyl alcohol-co-styrene), acrylamide acrylic ester copolymer, and mixtures thereof. Specifically, copolymers of acrylamide with hexyl acrylate, propyl acrylate or dodecyl acrylate are useful.

Preferably the solvent is selected from dimethyl sulfoxide, dimethylformamide, dimethylacetamide, formamide, formic acid, acetic acid, 2,2,2-trichloro ethanol, and mixtures thereof.

Preferably the nonsolvent is selected from water, alcohols having 1 to 4 carbon atoms, ammonia, ethylacetate, acetone, ethylenediamine, and mixtures thereof. The nonsolvent may be either liquid or gaseous.

The nonsolvent is caused to diffuse into the liquid layer of the resin solution by various methods. A liquid nonsolvent may be brought into contact with the liquid layer of resin solution from one or both sides thereof, for example by dipping the end of the tube at which the layer of resin solution is positioned into a liquid nonsolvent. Additionally or alternatively, nonsolvent may be introduced from the distant end of the tube. If a gaseous nonsolvent is to be used, the arrangement of support with layer of resin solution is positioned within an atmosphere which is saturated or nearly saturated with the vapours of the nonsolvent. Precipitation may also be accomplished in two successive steps by firstly applying gaseous nonsolvent and, after partial solidification, subsequently applying liquid nonsolvent.

Plane upper and lower surfaces of the microporous element are obtained when the final concentration of nonsolvent in the resin solution during precipitation is raised to about 50% by weight. A plane upper surface allows for a more uniform filtration performance of the filter element. A plane lower surface provides even contact with, e.g., blotting membranes onto which an adsorbed material is to be transferred.

Especially favourable results are obtained when one of the following combinations of resin/solvent/nonsolvent is used: one of poly(vinylalcohol-co-ethylene), nitrocellulose, cellulose propionate, or polyvinylacetate as resin, dimethyl sulfoxide as solvent and water as nonsolvent; or polyamides (like Nylon 6,6) as resin, 2,2,2-trichloro ethanol as solvent and acetone as nonsolvent.

Without intending to be bound to theory it is believed that in generating the microporous element according to this first embodiment of the present invention the following mechanisms are involved: When the nonsolvent diffuses into the layer of resin solution, the solubility of the resin is gradually decreased. As the limit of solubility is reached the resin begins to precipitate from the solution at individual points. The precipitation of the resin proceeds at the points of initial precipitation. Ultimately, the solvent/nonsolvent is enclosed in large interconnecting enclaves in a solid matrix of resin. The interconnecting enclaves form the liquid-permeable channels of the final microporous element. If a synthetic resin is used which comprises both hydrophilic and hydrophobic segments, the hydrophobic segments will be forced towards each other and brought into contact with each other as the concentration of nonsolvent in the resin solution increases. There will be interactions between the hydrophobic segments of neighbouring molecule chains, which result in the formation of a crystalline hydrophobic backbone of the precipitated resin. The hydrophilic segments will be oriented towards the enclaves filled with solvent/nonsolvent. Accordingly, a microporous element is obtained where the liquid-permeable channels are predominantly hydrophilic. This provides the benefit of biocompatibility. The term "biocompatibility" means that the three-dimensional structure of biopolymers, for example proteins, is maintained. The interphase forces are less destructive when the polymer surface is rich in hydroxyl, amide or ether groups.

In order to modify the adsorptive properties of the microporous element, the solution of the synthetic resin may further comprise solid microparticles. The micro particles may be composed of silicon dioxide, silica gel, aluminium oxide, titan dioxide, zirconium oxide, glass, carbon or graphite. Also, the particles can be composed of inorganic material, such as calcium phosphate, zinc polyphosphate or the like. Another type of granular microparticles consists of an inorganic core such as microporous silicagel with a microlayer of organic polymer. The pores and the surface of the grain may be modified in a way, that macromolecules are restricted from penetrating into the pores ("Restricted access material"). Also, the micro particles may consist of organic material such as a powder of cured resin, or highly crosslinked polysaccharides, as are available under the sephadex tradename, however care has to be taken in selecting an organic material in that it must not be soluble in the solvent used. The particles can be non-porous or porous, but preferably are porous with a preferred pore size in the range of 1 nm to 500nm. Generally, the particles have a size from 5 nm to 80 µm, in particular from 0.5 µm to 30 µm, however porous microparticles preferably have a size of 1 µm or more, whereas non-porous microparticles preferably have a size of 1 µm or less. The microparticles can be pretreated, e.g., derivatized, such that the adsorbent properties thereof meet specific requirements. Any kind of commercially available adsorbent particles as used for solid phase extraction or chromatography, such as affinity chromatography with proteins, antibodies, peptides, carbohydrates, nucleic acids, or for ion exchange chromatography, immuno chromatography, hydrophobic interaction chromatography, chelating chromatography and reversed phase chromatography are useful. Materials suited for high performance liquid chromatography are especially useful. For example proteins, such as specific antibodies, lectins, avidin, receptor-proteins, enzymes, synthetic peptides, nucleic acids or oligonucleotides may be attached to the microparticles, either covalently or via linkers. The adsorbent particles have a granular shape, for example spherical. The microparticles may be used in an amount of up to 50mg, preferably 100ng to 20mg, per filter element.

In the final microparticle-containing filter element, the outer or inner surfaces of the enclosed microparticles are accessible to an applied liquid sample, and adsorption/immobilization of analytes contained in the liquid sample can take place.

In a second embodiment, the invention relates to a method for producing a filter element by generating a microporous element within an aperture of a solid moisture-impervious support, comprising the steps of providing an aqueous solution of a hydrocolloid, which comprises solid microparticles slurried therein; applying the solution to the aperture so as to form a self-sustaining liquid layer over the cross-section of the aperture; causing the hydrocolloid solution to solidify; and, optionally, one or both of desiccating and crosslinking said layer of the solidified hydrocolloid solution.

Preferably, the hydrocolloid is selected from low melting agarose, starch, polyvinyl alcohol, and mixtures thereof. The aqueous solution of the hydrocolloid contains preferably 1 to 10% by weight, in particular 2 to 5% by weight of the solution, of the hydrocolloid. When polyvinyl alcohol is used as the hydrocolloid, the addition of up to 0,2% by weight of the solution, of sodium tetraborate or of up to 50% by weight of the solution, of dimethyl sulfoxide is sometimes advantageous.

These hydrocolloids are poorly soluble in cold water, however disperse or dissolve upon heating. Preferably, a hot hydrocolloid solution is applied to the aperture of the carrier. Upon cooling, the hydrocolloid solution solidifies.

In one alternative, the solidified hydrocolloid solution is subsequently desiccated. Desiccation can be accelerated by heating the arrangement to a temperature of about 40°C. Alternatively, in particular when using heat sensitive material, desiccation can be achieved by placing the arrangement in a closed chamber over a desiccating agent such as phosphorus pentoxide. The final moisture content preferably is less than 1 mbar water vapor partial pressure.

Upon desiccation, the solidified layer of hydrocolloid solution shrinks. In absence of the microparticles mentioned above, the solidified layer of hydrocolloid solution would shrink away from the inner wall of the support with the effect that no useful filter element would be obtained. According to the invention, microparticles are provided in the aqueous solution of hydrocolloid which act as pore-forming agent during desiccation. Accordingly, complete circumferential contact of the layer of hydrocolloid solution to the wall of the support is maintained and a plurality of microscopic cracks between the microparticles are formed upon desiccation. Also, the microparticles act so as to control or modify the adsorptive properties of the layer thus obtained. The microscopic cracks act as the liquid-permeable channels of the final microporous element. A proportion of 5 to 50%, calculated by weight of hydrocolloid solution, of microparticles will generally be useful.

The obtained layer of solidified hydrocolloid can be subjected to crosslinking instead of or after desiccation. For this purpose the microporous element is treated with crosslinking agents, e.g., boric acid, sodium tetraborate, phosphorus oxide chloride, epichlorhydrin or bisoxiranes, such as 1,4-butanediol diglycidyl ether. Polyvinylalcohol can be crosslinked with sodium tetraborate by applying alkaline pH for gelation. Both desiccation and crosslinking have the effect of increasing the mechanical stability and solvent-resistance of the final microporous element.

In a preferred method, an aqueous hydrocolloid solution, in particular an aqueous solution of low melting agarose, which comprises solid microparticles slurried therein is applied to the aperture of a solid moisture-impervious support so as to form a self-sustaining liquid layer over the cross-section of the aperture, then a channel-sparing nonsolvent is permeated through the liquid layer while retaining the layer by means of a retaining tool as explained in detail below, then the retaining tool is removed and the hydrocolloid solution is caused to solidify. Finally, the solidified hydrocolloid layer is preferably subjected to crosslinking.

Useful microparticles are those discussed above in connection with the first embodiment of the invention. Additionally, microparticles coated with dextran, such as dextran-coated charcoal, dextran-coated poly(styrene-divinyl benzene) or biological structures absorbed to a porous support, such as ribosomes, nucleosomes, chromosomes, synaptosomes, phages, plasmids, all preadsorbed to porous or non-porous supporting beads, are to be mentioned. The microparticles preferably have a size from 0.5 µm to 30 µm.

In a third embodiment, the present invention relates to a method for producing a filter element by generating a microporous element within an aperture of a solid moisture-impervious support, comprising the steps of providing a solution of a monomer or a mixture of monomers in a solvent, optionally comprising crosslinking monomers, applying the solution to the aperture so as to form a self-sustaining liquid layer over the cross-section of the aperture; and causing the monomer(s) to polymerize.

Preferably, the monomers are ethylenically unsaturated monomers such as vinylacetate or other vinylesters, acrylic acid and its derivatives. Preferred acrylic acid derivatives include acrylic acid amides, such as acrylamide, N,N-dimethyl acrylamide, acrylic acid diamine monoamide; acrylic esters, such as butyl acrylate, dodecyl acrylate, octadecyl acrylate, vinyl acrylate, 2,3-epoxypropyl acrylate, diethylaminoethyl acrylate, 2-dimethylaminoethyl acrylate, and 3-sulfopropyl acrylate.

Crosslinking monomers are monomers having two or more sites of ethylenical unsaturation. A preferred crosslinking monomer is N,N'-methylenebis(acrylamide). The presence of crosslinking monomers increases the mechanical stability and solvent-resistance of the final microporous element.

As a solvent water, dimethyl sulfoxide, dimethylformamide, dimethylacetamide, formamide, formic acid, acetic acid, 2,2,2-trichloro ethanol, or mixtures thereof are useful, depending on the nature of the monomer(s) used.

In a preferred method, an aqueous solution of acrylic acid or its derivatives, preferably together with crosslinking monomers, which comprises solid microparticles slurried therein is applied to the aperture of a solid moisture-impervious support so as to form a self-sustaining liquid layer over the cross-section of the aperture, then a channel-sparing nonsolvent is permeated through the liquid layer while retaining the layer by means of a retaining tool as explained in detail below, then the retaining tool is removed and the acrylic acid (derivatives) caused to polymerize.

A proportion of 1 to 10% by weight of crosslinking monomer(s), for example N,N'-methylenebis(acrylamide), calculated on the total monomer, is generally useful.

Also a mixture of hydrophilic and hydrophobic monomers is useful. In this case, there will be interactions between the polymerized units of the hydrophobic monomers of the growing molecule chains, which result in the formation of a crystalline hydrophobic backbone of the polymer formed. The units of the hydrophilic monomers will be orientated towards the enclaves filled with the solvent. Accordingly, a microporous element is obtained where the liquid-permeable channels are predominantly hydrophilic.

Sometimes the monomer or mixture of monomers is soluble in the solvent, whereas the growing polymer becomes increasingly insoluble in the selected solvent and finally precipitates from the solution. A mixture of solvents may be useful in some instances. A nonsolvent can be caused to diffuse into the layer of polymer solution after polymerization, in order to precipitate the polymer formed or to complete precipitation of the polymer formed. Also, a porogenic liquid, such as n-dodecanol or polypropylene oxides, can be present during polymerisation. The polymerisation may also result in a polymer gel swelled with the solvent used.

Polymerisation of the ethylenically unsaturated monomers is generally effected under the influence of free radicals. Free radicals are generated from the usual thermally decomposable initiators or a combination of free radical initiator and reducing agent. Usually, the initiator is added to the monomer solution. The concentration of the initiator is adjusted to provide sufficient pot life for application of the monomer solution to the aperture of the support. A combination of N,N'-tetramethyl ethylene diamine and a persulfate is especially preferred as initiator. In the alternative, an aqueous solution of initiator or initiator/reducing agent is used which is in contact by one or both sides of the liquid layer of monomer solution. Also photoinitiators such as riboflavin are useful for initiating the polymerization.

Instead of ethylenically unsaturated monomers, a monomer or mixture of monomers can be used which are capable of undergoing polyaddition or polycondensation. Among useful monomers are a combination of diamines with polyepoxides, such as a combination of ethylenediamine with 1,4-butanediol diglycidylether. Further examples include polypropylene oxide diamine and 1,4-butanediol, each with 1,4-butanediol diglycidyl ether.

This third embodiment involves the benefit of a lower viscosity of the monomer solution compared to a solution of a polymer of the same monomers at a corresponding concentration. The lower viscosity facilitates application of the solution to the aperture of the support.

In order to modify the adsorptive properties of the microporous element, the monomer solution may further comprise solid microparticles. Microparticles that are useful, have been discussed above in connection with the first embodiment of the invention.

Where microparticles are used in the first or the third embodiment as well as in the second embodiment, it is sometimes advantageous to permeate the microparticle-containing liquid layer in the aperture of the support with a channel-sparing non-solvent in order to displace excessive hydrocolloid solution, resin solution or monomer solution, respectively. The channel-sparing nonsolvent must be non-miscible with the solvents used. Permeation can be effected by pressing or drawing channel-sparing nonsolvent through the microparticle-containing layer whilst retaining the layer by means of a retaining tool consisting of a microporous filter. The hydrocolloid solution, resin solution or the monomer solution, respectively, is displaced from the larger interstices between the microparticles and accumulates at the points of contact of the microparticles. The channel-sparing nonsolvent keeps the interstices free, thus producing channels. The retaining tool is removed before solidification of the hydrocolloid or polymerisation of the monomer(s) or precipitation of the resin. Upon solidification/polymerisation/precipitation, the microparticles are linked one to another at their points of contact. The channel-sparing nonsolvent is removed by washing with a suitable liquid. As channel-sparing nonsolvent, silicon oil is preferred.

Also possible are combinations of two or more of the three embodiments discussed above. For example, a microparticle-containing layer could be prepared according to the third embodiment and subsequently be impregnated with a resin solution, in which resin is precipitated according to the first embodiment.

In the various embodiments of the invention, the handling of very small liquid volumes is involved. Undesired evaporation of solvents before solidification can be avoided when all operations are performed in closed systems with solvent-saturated atmosphere. Preferably the temperature is precisely controlled.

The invention further relates to the filter elements which are obtainable by the various embodiments discussed above. The filter elements according to the invention can be applied for most versions of analytical or micro preparative liquid chromatography such as affinity chromatography, immuno chromatography as well as for binding studies enabling also the isolation of multi component binding complexes.

The filter elements may be especially useful in biotechnology, in molecular biology and in medical biochemical diagnostics, allowing low-cost screening of hundreds of samples in parallel.

The following advantages were achieved: The method opens the way for far going miniaturization, avoids unspecific loss of biopolymer by presenting biocompatible surfaces and by avoiding the use of frits, saves cost by using expensive microparticle material in very small amounts. In addition transfer of separated substances from the filter to blotting membranes is possible without having problems with dead volumes. Production at low cost allows the filter to be used only once, avoiding the risk of contamination. The possibility of using microparticles with known or standardized adsorptive properties allows for the manufacture of filter elements with predictable adsorption characteristics and facilitates quality control.

The present invention will be described in more detail below with reference to the exemplary embodiments which are schematically illustrated in the following drawings, in which:
Figure 1 shows a filter element obtained according to a preferred embodiment of the invention; and
Figure 2 illustrates the mode of operation of the channel-sparing nonsolvent.

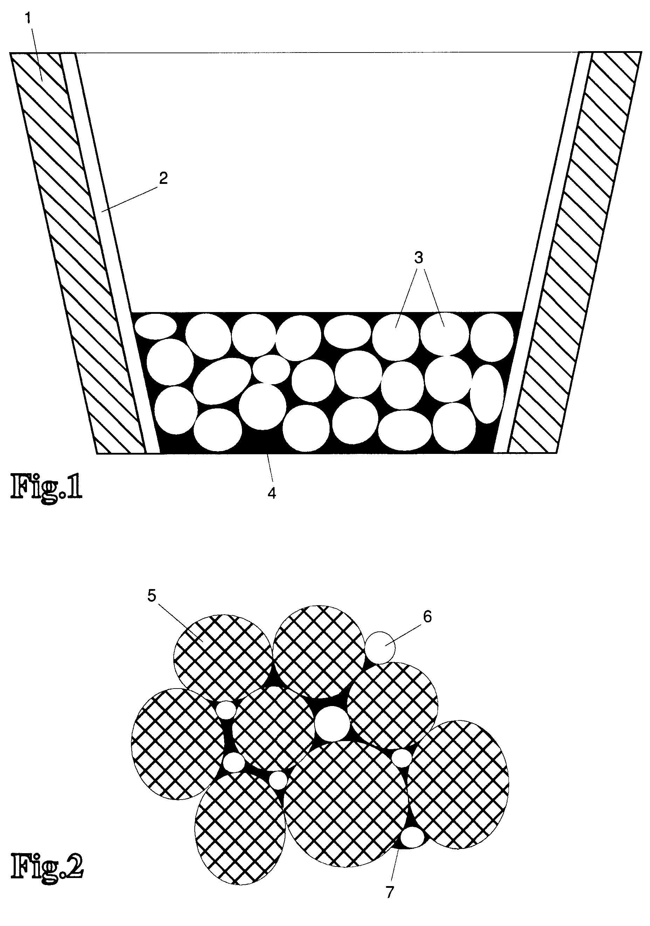

Figure 1 shows a filter element obtained according to a preferred embodiment of the invention. The filter element comprises a moisture-impervious support (1) having a hydrophilic coating (2) at the inner wall thereof. The filter element further comprises microparticles (3) in a matrix (4) of precipitated resin, solidified hydrocolloid or polymerized monomer.

Figure 2 illustrates the mode of operation of the channel-sparing nonsolvent. The channel-sparing nonsolvent (6), shown in cross-section, keeps the larger interstices between the microparticles (5) free. The solution of resin, hydrocolloid or monomer (7) accumulates at the points of contact of the microparticles.

The invention will now be further illustrated by the following examples.

Microfilters of example 1 - 4 are less resistant to organic solvents but more easy to prepare. Microfilters of example 5 and 6 are especially useful when labile macromolecules such as enzymes, antibodies or receptor proteins are bound to microparticles. The solidification occurs under biocompatible conditions with respect to temperature, acidity and tonicity. Microfilters of example 7 are especially useful for covalent immobilization. Microfilters of example 8 are useful when organic solvents are applied.

### Example 1:

Production of biocompatible surface of the impermeable element and production of microporous element by diffusion of nonsolvent.

A solution of 3% polyvinyl acetate (w/v) in acetone (molecular weight 500000, Cat. No. 38793-2; Aldrich, Steinheim G) was applied to the inner surface of a 1ml-pipet tip (Cat. No. 00 30 001.311 Eppendorf, Hamburg G) and was drained over blotting paper. After evaporating at ambient temperature and heating at 70° C overnight, the tip was filled with 1 ml of 1 N-NaOH in water, and a partial reaction was performed at 24°C for 30 min. Finally, the tip was washed and dried. In addition, a liquid phase was prepared, by dissolving 1 g of poly (vinyl alcohol-co-ethylene) of 44 mol % ethylene content (Cat. No. 41, 410-7; Aldrich, Steinheim G.) with 4 ml dimethyl sulfoxide at 100° C. A volume of 3 µl of liquid phase was taken up at 40° C. After closing the smaller aperture of the pipet tip, water was introduced into the tip as a vapor. One hour later, 50 µl of water was applied directly over the solidifying liquid phase to obtain further diffusional precipitation. The flow rate of the thus obtained filter element was 5,3 µl/min (0,8 mm aperture; 500mbar).

### Example 2:

Production by precipitation of resin with inclusion of microporous beads.

100 µg of reversed-phase material on silica gel (C₁₈, 30 nm pore, 5µm bead; Vydac, Hesperia, CA, USA) was sonicated with the polymer solution (see example 1). This liquid phase was then treated further as described under example 1. The flow rate was 1 ml/min (aperture 0,8 µm; 1 bar). With silicon dioxide (fumed silica, 14 nm size; Cat. No. S-5505, Sigma, Deisenhofen G.) as adsorbent, instead of reversed-phase material, the flow-rate was 240 n/min.

### Example 3:

Production by precipitation of semisynthetic polymer with inclusions of a mixture of different types of microparticles.

A mixture was prepared from three different types of porous microparticles: 100 mg of anion exchanger based on silica gel (Adsorbex - SAX, Cat. No. 19845; Merck, Darmstadt G.) 100 mg of cation exchanger (Adsorbex - SCX, Cat. No. 19846) and 100 mg reversed-phase RP8 (Cat. No. 9362). After sonification with 1 ml of dimethyl sulfoxide and centrifugation, the wet sediment was supplemented with 600 µl of 15% cellulose propionate (average molecular weight 200 000; Cat. No. 18462-4; Aldrich, Steinheim, G.) in dimethyl sulfoxide, prepared at 95°C. A modified Comfortip (Cat. No. 30061; Eppendorf, Hamburg G) with biocompatible surface modification was held pressed against the microporous-retainer-tool, filled with 35µl of liquid and layered with 80µl of silicon oil and finally layered with 200µl distilled water. Positive pressure (at least 2 bar) was applied until the water phase passed finally the microfilter. The flow rate was 10µl/min. (1,5 mm aperture, 12 mm length; 7 mbar).

### Example 4:

Production by precipitation of semisynthetic polymer in the nanoliter range.

A volume of 200 nl of a 20% solution of cellulose propionate (mol. weight 200 000) in dimethyl sulfoxide (w/v) was introduced into a gel loader tip (Cat. No. 00 30 001.222; Eppendorf, Hamburg G). The aperture was closed temporarily with silicon oil, and nonsolvent was introduced as a vapor from the other side. The flow rate was 1,5 µl/min (aperture 80 µm; 100 mbar).

### Example 5:

Production by crosslinking of reversible hydrogel in the presence of channel-sparing nonsolvent at 0°C.

A solution of 5% (w/v) poly(vinyl alcohol) (molecular weight 124 000 - 186 000, 99% hydrolyzed; Cat. No. Aldrich, 36 306-5; Steinheim G.) in water was prepared at 100°C. 4 ml of solution were mixed with 1 ml of 50 mM sodium tetraborate 4.7 and cooled to 0°C. Finally, 1g of enzyme-containing SAX particles (Adsorbex-SAX, Merck, Darmstadt G.) were added. 40 µl of this liquid-phase were filled into a modified Comfortip with a biocompatible surface. The tip was pressed against a microporous-retaining tool (see example 7) and was layered with 50 µl silicon oil. After applying positive pressure, migration of the silicon oil was achieved into the granular bed. In order to achieve crosslinking, a final layer of 50 mM sodium tetraborate pH 8.6 solution was forced through the Comfortip. The flow rate was 0,5 µl/min (1,3 mm aperture; 7mbar).

### Example 6:

Production by using a reversible hydrogel in the presence of a channel-sparing non-solvent.

One gram of DEAE-Si 300,10 µm-size (Cat. No. 43536; Serva, Heidelberg G) was mixed with 5 ml of a 2% agarose solution at 40°C. The agarose (low melt preparative agarose; Cat. No. 162-0017; Bio-Rad Munich, G) had been dissolved at 90°C in 3% sucrose solution. Then, 100 µl of liquid phase was taken up into a modified standartip with biocompatible surface coating, as described before (Standartip Cat. No. 30.003.004; Eppendorf, Hamburg G). The standartip was held pressed against the microporous retaining tool, as described under example 7. After addition of an upper layer of 200 µl silicon oil at 40°C, positive pressure was applied until 150 µl had passed into the microporous retaining tool. After removal of the tool, solidification was achieved at 6°C. Finally the silicon oil was expelled by filtration of 500 µl sucrose solution. The filtration rate was 7 µl/min (aperture 5 mm; 7 mbar).

### Example 7:

Production by polycondensation in presence of channel-sparing nonsolvent.

100 mg of silicagel (Lichrosorb Si 100, 7 µm size; Cat. No. 9340; Merck, Darmstadt, G.) were sonicated with 500 µl of monomer solution (by vol: 5 parts of 1,4 - butanediol diglycidyl ether (Cat. No. 22,089-2; Aldrich, Steinheim G.), one part dimethyl sulfoxide and one part ethylenediamine). 35 µl of liquid phase were taken up into a modified Comfortip (Cat. No. 30061; Eppendorf, Hamburg G). The filled Comfortip was held pressed against a retaining tool consisting of a microporous metal sieve (Cat. No. 12550812; Bischoff, Leonberg) located on a 3 mm thick filter paper (Cat. No. 2727; Schleicher and Schüll, Dassel, G). After layering 80 µl of silicon oil onto the liquid-phase, positive pressure was applied (at least one bar) until 30 µl of silicon oil were flown through the Comfortip. After removal from the retaining tool, solidification was achieved by curing in a closed system. Finally, the micro filter was washed with distilled water and suitable buffer. The flow rate was 32 µl/min (1,3 mm aperture; 1 bar).

When using nonporous silicon dioxide (1-5 µm, Cat. No. S-56631; Sigma, Deisenhofen G.) instead of silica gel as adsorbent, the flow rate was 1 µl/min (aperture 1,5 mm; volume 10 µl, Comfortip 1 bar).

### Example 8:

Production by polymerisation in the presence of channel-sparing nonsolvent.

100 mg of silica gel type anion exchanger of HPLC quality (DEAE-Si 300, 10 µm; Cat. No. 43536; Serva, Heidelberg G) were sonicated with ice-cold 500 µl monomer solution (By weight: 26% acrylamide; 0,7% bis acrylamide; 170 mM Tris HCl pH 8,8; 0,05% tetramethyl ethylenediamine (Cat. No. 8133; Sigma, Deisenhofen) 0,08% sodium persulfate).

All further steps were done as described in example 7 except that the temperature was held between 0-2°C as during the flushing step with silicon oil. Finally, solidification was achieved by curing at 45°C. The flow rate was 20 µl/min (aperture 1 mm; 600 mbar).

### Example 9:

Production using hydrogel and microparticles with reformation of channels by means of drying.

One ml of a 2% (w/v) solution of agarose (Bio-Rad, Munich G.) was mixed and sonicated with 200 mg of microporous titan dioxide (YMC-Gel, TIAOS 20 NP; YMC Europe, Schermbeck, G.) at 40°C. At the same temperature, 50 µl of liquid was taken up into a pipet tip that was provided with biocompatible surface coating (see example 1) and drained over a microporous-retaining-tool (see example 7). The pressure was adjusted in a way that flow was stopped when the microparticles were just beginning to be exposed. Solidification was achieved at 6°C. Drying was done at ambient temperature and finally over P₂O₅, at 1 mb. The flow rate was 33 µl/min (1 bar).

### Example 10:

Isolation of multimolecular complexes consisting of oligonucleotides and specific macromolecules, noncovalently bound together.

A labelled oligonucleotide probe was incubated with nuclear extract, and 8 µl were filtered over a polyacrylamide - DEAE microfilter (example 8) which was washed with 40 µl buffer. The free oligonucleotide was retained and the complexed form was obtained in the eluate within some minutes.

## Claims

1. A method for producing a filter element by generating a microporous element within an aperture of a solid moisture-impervious support, comprising the steps of
a) applying a liquid phase to the aperture so as to form a self-sustaining liquid layer over the cross-section of the aperture; and
b) causing solidification in spongy form of at least part of the liquid phase.

2. A method for producing a filter element by generating a microporous element within an aperture of a solid moisture-impervious support, comprising the steps of
a) providing a solution of a synthetic or semi-synthetic resin in a solvent;
b) applying the solution to the aperture so as to form a self-sustaining liquid layer over the cross-section of the aperture; and
c) causing a nonsolvent to diffuse into the layer, which nonsolvent is miscible with the solvent, whereby the synthetic resin precipitates to form the microporous element.

3. The method according to claim 2, wherein the resin is selected from the group consisting of polyvinyl esters, partially deacylated polyvinyl esters, cellulose derivatives, polyamides, and mixtures thereof.

4. The method according to claim 2, wherein the resin comprises both hydrophilic and hydrophobic segments within its molecules.

5. The method according to claim 4, wherein the resin is selected from the group consisting of poly(vinyl alcohol-co-ethylene), poly(vinyl alcohol-co-vinylacetate), ethylene acrylic acid copolymer, ethylene acrylic ester copolymer, ethylene acrylamide copolymer, acrylic acid vinylacetate copolymer, acrylamide vinylacetate copolymer, copolymer of acrylic acid diamine monoamide with vinylacetate, poly(vinyl alcohol-co-styrene), acrylamide acrylic ester copolymer, and mixtures thereof.

6. The method according to anyone of claims 2 to 5, wherein the solvent is selected from the group consisting of dimethyl sulfoxide, dimethylformamide, dimethylacetamide, formamide, formic acid, acetic acid, 2,2,2-trichloro ethanol, and mixtures thereof.

7. The method according to anyone of claims 2 to 6, wherein the nonsolvent is selected from the group consisting of water, alcohols having 1 to 4 carbon atoms, ammonia, ethylacetate, acetone, ethylene diamine, and mixtures thereof.

8. The method according to anyone of claims 2 to 7, wherein the solution of the synthetic resin further comprises solid microparticles for modifying the adsorptive properties of the final microporous element.

9. A method for producing a filter element by generating a microporous element within an aperture of a solid moisture-impervious support, comprising the steps of
a) providing an aqueous solution of a hydrocolloid, which comprises solid microparticles slurried therein;
b) applying the solution to the aperture so as to form a self-sustaining liquid layer over the cross-section of the aperture;
c) causing the hydrocolloid solution to solidify; and
d) optionally, one or both of desiccating and crosslinking said layer of the solidified hydrocolloid solution.

10. The method according to claim 9, wherein the hydrocolloid is selected from the group consisting of low melting agarose, starch, polyvinyl alcohol, and mixtures thereof.

11. The method according to claim 9 or 10, wherein the solid microparticles have a size from 0.5 µm to 30 µm.

12. The method according to anyone of claims 9 to 11, wherein the layer of hydrocolloid solution is subjected to crosslinking by sodium tetraborate.

13. A method for producing a filter element by generating a microporous element within an aperture of a solid moisture-impervious support, comprising the steps of
a) providing a solution of a monomer or a mixture of monomers in a solvent, optionally comprising crosslinking monomers;
b) applying the solution to the aperture so as to form a self-sustaining liquid layer over the cross-section of the aperture; and
c) causing the monomer(s) to polymerize.

14. The method according to claim 13, wherein the monomer is selected from the group consisting of vinylesters, acrylic acid and its derivatives, and polymerization is effected under the influence of free radicals.

15. The method according to claim 13 or 14, wherein the monomer solution further comprises solid microparticles for modifying the adsorptive properties of the final microporous element.

16. The method according to anyone of claims 8 to 12 or 15, wherein the liquid layer in the aperture of the support is permeated with a channel-sparing nonsolvent.

17. The method according to claim 16, wherein the channel-sparing nonsolvent is silicon oil.

18. The method according to anyone of claims 1 to 17, wherein the support is formed of polypropylene, polyethylene, propylene/ethylene copolymer, polyvinyl acetate, polyamide, polystyrene, polyethylene terephthalate, polyether etherketon (PEEK), polycarbonate, polyethylene vinylacetate, polyester, polyamide, or mixtures thereof, or composite materials thereof with fibres or frames of glass, silicon dioxide, carbon or ceramics.

19. The method according to anyone of claims 1 to 18, wherein the support has the form of a tube, and the microporous element is generated at or near to one edge of the tube.

20. The method according to claim 19, wherein at least a section of the tube is of conical form, having a smaller and a larger cross-section end, and the microporous element is generated at or near to the smaller cross-section end.

21. The method according to claim 19 or 20, wherein the step of applying the solution to the aperture is accomplished by allowing the solution to ascend in the tube by capillary action.

22. The method according to anyone of claims 19 to 21, wherein the inner wall of the tube is coated with a hydrophilic coating.

23. The method according to claim 22, wherein the edge of the tube next to the microporous element is kept free of hydrophilic coating.

24. The method according to claim 22, wherein the coating is formed by applying a solution of one or more polyvinyl esters in an organic solvent to the inner wall of the tube, allowing the organic solvent to evaporate, and partially hydrolyzing the resulting layer of polyvinyl ester at the surface thereof.

25. The method according to anyone of claims 1 to 24, wherein the diameter of the aperture is from 0.02 mm to 4 mm.

26. A filter element comprising a solid moisture-impervious support member having at least one aperture with at least one microporous element generated therein in situ out of a liquid phase.

27. The filter element according to claim 26, wherein the microporous element comprises a resin selected from the group consisting of polyvinyl esters, partially deacylated polyvinyl esters, cellulose derivatives, polyamides, and mixtures thereof.

28. The filter element according to claim 26, wherein the porous element comprises a resin selected from the group consisting of poly(vinyl alcohol-co-ethylene), ethylene acrylic acid copolymer, ethylene acrylic ester copolymer, acrylamide vinylacetate copolymer, copolymer of acrylic acid diamine monoamide with vinylacetate, poly(vinyl alcohol-co-styrene), acrylamide acrylic ester copolymer, and mixtures thereof.

29. The filter element according to claim 27 or 28, wherein the microporous element comprises dispersed solid microparticles.

30. The filter element according to claim 26, wherein the microporous element comprises a solidified hydrocolloid solution, optionally desiccated or crosslinked, with solid microparticles dispersed therein.

31. The filter element according to claim 30, wherein the hydrocolloid is selected from the group consisting of low melting agarose, starch, polyvinyl alcohol, and mixtures thereof.

32. The filter element according to claim 26, wherein the microporous element comprises the polymerisation product of a monomer selected from the group consisting of vinylesters, acrylic acid and its derivatives.

33. The filter element according to claim 26, wherein the microporous element comprises the polymerisation product of a diamine and a diepoxide.

34. The filter element according to claim 32 or 33, wherein the microporous element comprises dispersed solid microparticles.

35. The filter element according to anyone of claims 26 to 34, wherein the support member has the form of a tube, and the microporous element is located at or near to one edge of the tube.

36. The filter element according to claim 35, wherein at least a section of the tube is of conical form, having a smaller and a larger cross-sectional end, and the microporous element is located at or near to the smaller cross-sectional end.

37. The filter element according to claim 34 or 36, wherein the inner wall of the tube is coated with a hydrophilic coating.

38. The filter element according to claim 37, wherein the edge of the tube next to the microporous element is free of hydrophilic coating.

39. The filter element according to anyone of claims 26 to 38, wherein the diameter of the aperture is from 0.02 mm to 4 mm.

40. A multiple channel filter element, comprising a plurality of filter elements according to anyone of claims 26 to 39.
